# EUROPÄISCHE PATENTSCHRIFT

(11) **EP 2 689 235 B1**
(45) Veröffentlichungstag und Bekanntmachung des Hinweises auf die Patenterteilung: **29.04.2015**
(21) Anmeldenummer: 12709598.2
(22) Anmeldetag: 13.03.2012
(51) Int. Cl.: G01N 21/55

(54) **VERFAHREN UND VORRICHTUNG ZUM BESTIMMEN DER REFLEKTIVITÄT EINER OBERFLÄCHE**
METHOD AND DEVICE FOR DETERMINING THE REFLECTIVITY OF A SURFACE
PROCÉDÉ ET DISPOSITIF DE DÉTERMINATION DE LA RÉFLECTANCE D'UNE SURFACE

(30) Priorität: 22.03.2011 DE 102011005907
(43) Veröffentlichungstag der Anmeldung: 29.01.2014
(73) Patentinhaber: Trumpf Werkzeugmaschinen GmbH + Co. KG, 71254 Ditzingen (DE)
(72) Erfinder: MEINDL, Ulrich, 71111 Waldenbuch (DE); BRAUN, Sonja, 73084 Salach (DE)
(74) Vertreter: Kohler Schmid Möbus Patentanwälte
(86) Internationale Anmeldenummer: PCT/EP2012/054344
(87) Internationale Veröffentlichungsnummer: WO 2012/126769

(56) Entgegenhaltungen:
- US-A- 5 461 481
- US-A1- 2004 227 948
- US-A1- 2007 147 821

## Beschreibung

Die Erfindung betrifft ein Verfahren zum Bestimmen der Reflektivität einer Oberfläche, die mit einer Auflichtbeleuchtung beleuchtet wird.

Vorrichtungen und Verfahren zur Reflektivitätsmessung sind in z.B. den Patentanmeldungen US2004/0227948, US2007/0147821 sowie im Patent US5,461,481 beschrieben.

Aufgrund der konstruktiven Umgebung kann beim Einsatz von Bildverarbeitungssystemen innerhalb von Werkzeugmaschinen zur Beleuchtung häufig nur eine in ihren räumlichen Ausdehnungsverhältnissen relativ zum Arbeitsabstand kleine Auflichtbeleuchtung eingesetzt werden. Die Erkennung hochreflektierender Werkstückoberflächen stellt beim Einsatz solcher Bildverarbeitungssysteme mit relativ zum Arbeitsabstand kleinen Auflichtbeleuchtungen ein Problem dar. Die hohe Reflektivität der Werkstückoberfläche bzw. die Ab-bildung der Beleuchtungseinrichtung auf der spiegelnden Werkstückoberfläche verhindern häufig eine sinnvolle automatische Belichtungseinstellung. Dies kann dazu führen, dass der Einsatz solcher Bildverarbeitungssysteme gemeinsam mit hochreflektierenden Werkstückoberflächen verhindert wird.

Demgegenüber ist es die Aufgabe der Erfindung, ein Verfahren und eine Vorrichtung zum Bestimmen der Reflektivität einer Werkstückoberfläche anzugeben.

Diese Aufgabe wird erfindungsgemäß durch ein Verfahren mit den Merkmalen von Patentanspruch 1 und durch eine Vorrichtung mit den Merkmalen von Patentanspruch 6 gelöst.

Erfindungsgemäß können hochreflektierende Werkstückoberflächen mittels eines Bildverarbeitungssystems (z.B. Kamera und Recheneinheit) und einer Auflichtbeleuchtung erkannt und ein Maß für die Reflektivität der Werkstückoberflächen bestimmt werden. Hierfür werden mehrere Bilder ausgehend von der niedrigsten einstellbaren Belichtungszeit des Bildverarbeitungssystems in z.B. festen Belichtungsabständen aufgenommen. Die Bilder werden hinsichtlich sehr heller Bildbereiche (übersteuerte Bildbereiche) ausgewertet. Im Anschluss an die Erkennung der Reflektivität der Werkstückoberfläche können Messaufgaben, die bisher fehlgeschlagen sind, mit der für die jeweilige Werkstückoberfläche korrekten Belichtungszeit stattfinden. Die Umsetzung des Verfahrens und der darin enthaltenen und erforderlichen Berechnungen kann automatisiert und softwarebasiert erfolgen.

Erfindungsgemäß wird die Funktion des hellen Flächenanteils über die Belichtungszeit dargestellt. Durch Ableitung dieser Funktion nach der Belichtungszeit kann anschließend die Änderung des hellen Flächenanteils, also die Steigung der Funktion, über der Belichtungszeit ermittelt werden. In der praktischen Umsetzung werden lediglich bei einigen Belichtungszeiten die hellen Flächenanteile bestimmt. Durch Bildung der diskreten Ableitung kann dann die Änderung des hellen Flächenanteils über die Belichtungszeit dargestellt und als Maß für die Reflektivität der Werkstückoberflächen genutzt werden. Vorzugsweise wird in jedem der aufgenommen Bilder die Anzahl der derjenigen hellen Pixel bestimmt, die eine vorbestimmte Mindesthelligkeit aufweisen, und dann aus der Anzahl dieser hellen Pixel in Abhängigkeit der unterschiedlichen Belichtungszeiten die Reflektivität der Werkstückoberfläche bestimmt.

Ein zusätzliches Problem in der Praxis besteht darin, dass nicht bekannt ist, an welchen bzw. wie vielen Stellen im aufgenommenen Bild stark reflektierende Oberflächen vorhanden sind. So wird das Bildverarbeitungssystem häufig zur Erfassung der Position des unter Umständen bereits zugeschnittenen Werkstücks eingesetzt. Es ist nun möglich, dass das Bild die Werkstückoberfläche nur in randseitigen Ausschnitten enthält, so dass in Teilen des Bildes keine Oberfläche vorhanden ist. In einem anderen Fall enthält die Werkstückoberfläche ein Loch, welches große Teile des Bildes abdeckt. In solchen Fällen ist die absolute Größe der Änderung des hellen Flächenanteils sowohl bei kürzeren als auch bei längeren Belichtungszeiten relativ gesehen gering, während im Falle, dass große Teile der Oberfläche im Bild vorhanden sind, die absolute Größe der Änderung des hellen Flächenanteils sowohl bei kürzeren als auch bei längeren Belichtungszeiten relativ gesehen groß ist. Daher wird der Quotient aus der Änderung des hellen Flächenanteils bei kürzeren Belichtungszeiten und der Änderung des hellen Flächenanteils bei längeren Belichtungszeiten als ein Maß für die Reflektivität der Oberfläche bestimmt. Man erhält so ein von der absoluten Größe der Änderung des hellen Flächenanteils unabhängiges Maß für die Reflektivität der Oberfläche. Die Interpretation dieses Quotienten kann dann die Grundlage zur Erkennung von Oberflächen mit hochreflektierenden Eigenschaften bilden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: den Strahlenverlauf einer Auflichtbeleuchtung bei einer hochreflektierenden Werkstückoberfläche;
- Fig. 2: die Anzahl (a) bzw. deren Ableitung über die Belichtungszeit (b) der bei einer hochreflektierenden Werkstückoberfläche gemessenen hellen Pixel in Abhängigkeit von der Belichtungszeit;
- Fig. 3: den Strahlenverlauf einer Auflichtbeleuchtung bei einer matten Werkstückoberfläche; und
- Fig. 4: die Anzahl (a) bzw. deren Ableitung über die Belichtungszeit (b) der bei einer matten Werkstückoberfläche gemessenen hellen Pixel in Abhängigkeit von der Belichtungszeit.

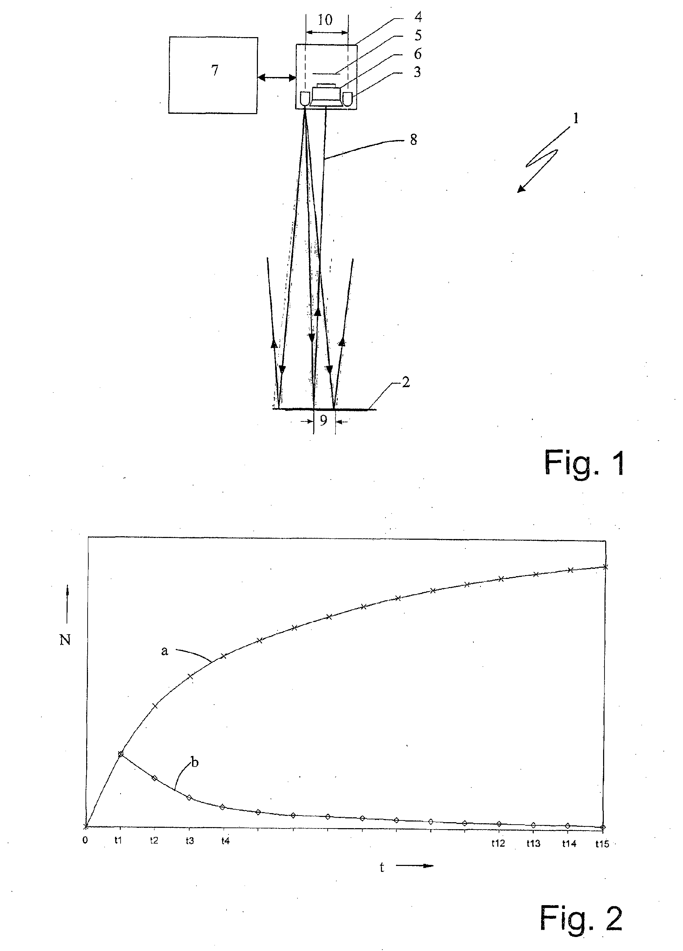

Die in **Fig. 1** gezeigte Vorrichtung **1** zur Bestimmung der Reflektivität einer Oberfläche **2** umfasst eine Auflichtbeleuchtung **3** zur Beleuchtung der Oberfläche ("Objekt") 2, eine Kamera **4** mit einem Flächensensor **5** und einem vorgeordneten Objektiv **6** zur Aufnahme eines Bildes von der Oberfläche 2 und ein Bildverarbeitungssystem **7** zur Verarbeitung der aufgenommenen Bilder. Die Auflichtbeleuchtung 3 ist seitlich neben dem Flächensensor 5, z.B. zu beiden Seiten des Flächensensors 5 oder ringförmig um den Flächensensor 5 herum, angeordnet.

Wird wie in Fig. 1 eine hochreflektierende Oberfläche 2 mit der Auflichtbeleuchtung 3 beleuchtet, fallen nur wenige von der Oberfläche 2 reflektierte Lichtstrahlen **8,** nämlich diejenigen, die auf den sichtbar reflektierenden Bereich **9** auftreffen, durch das Objektiv 6 auf den Flächensensor 5. Diejenigen Strahlen, die außerhalb des sichtbar reflektierenden Bereichs 9 auf die Oberfläche 2 auftreffen, werden nicht zurück in das Objektiv 6 reflektiert. Somit ergibt sich nur ein kleiner sichtbar reflektierender Bereich 9 auf der Oberfläche 2 mit dem halben Durchmesser **10** der Auflichtbeleuchtung 3.

Wird die Belichtungszeit schrittweise erhöht, ergibt sich ein Kurvenverlauf wie in **Fig. 2** exemplarisch dargestellt. Kurve a zeigt die im aufgenommenen Bild vorhandene Anzahl N(t) der hellen Pixel, welche eine vorbestimmte Mindesthelligkeit aufweisen, in Abhängigkeit der Belichtungszeit t, und Kurve b zeigt die diskrete zeitliche Ableitung N(t)/Δt der Kurve a.
Wie die Kurven a und b zeigen, steigt für niedrige Belichtungszeiten t die im aufgenommenen Bild vorhandene Anzahl N der hellen Pixel, welche eine vorbestimmte Mindesthelligkeit aufweisen, aufgrund der direkten Reflektionen im sichtbar reflektierenden Bereich 9 stark an, und bei höheren Belichtungszeiten nimmt der Anstieg der Anzahl N der hellen Pixel ab. Die absolute Anzahl N der hellen Pixel hängt stark vom Durchmesser 10 der Auflichtbeleuchtung 3 bzw. deren aktiven Fläche ab.

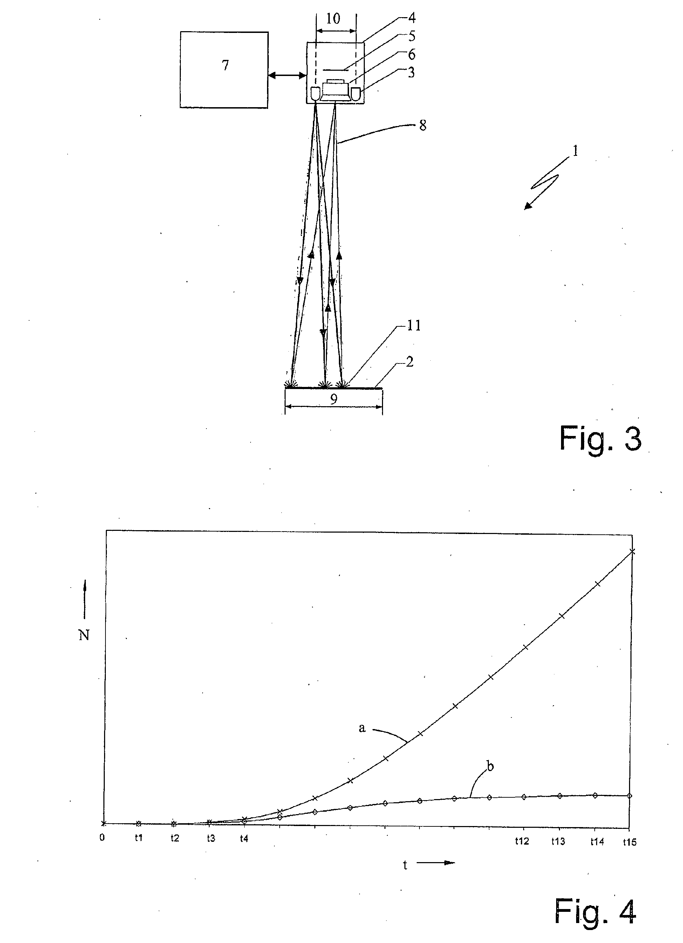

Wird wie in **Fig. 3** hingegen eine matte (diffus reflektierende) Oberfläche 2 mit der Auflichtbeleuchtung 3 beleuchtet, wird das einfallende Licht auf der Oberfläche 2, wie bei **11** angedeutet, gestreut und fällt von dem sichtbar reflektierenden Bereich 9 durch das Objektiv 6 auf den Flächensensor 5 der Kamera 4. Die Lichtverteilung im sichtbar reflektierenden Bereich 9 ist nicht homogen.

Wird die Belichtungszeit schrittweise erhöht, ergibt sich ein Kurvenverlauf wie in **Fig. 4** exemplarisch dargestellt. Kurve a zeigt die im aufgenommenen Bild vorhandene Anzahl N(t) der hellen Pixel, welche eine vorbestimmte Mindesthelligkeit aufweisen, in Abhängigkeit der Belichtungszeit t, und Kurve b zeigt die diskrete zeitliche Ableitung N(t)/Δt der Kurve a. Die Zahl N der hellen Pixel steigt über einen größeren Bereich der Belichtungszeit nahezu gleichförmig an.

Wie Fign. 2 und 4 zeigen, stellen die Änderung der Anzahl N der hellen Pixel mit der Belichtungszeit t bei kürzeren Belichtungszeiten, insbesondere bei den kürzestmöglichen Belichtungszeiten der Kamera 6 bzw. des Bildverarbeitungssystems 7, sowie die Änderung der Anzahl N der hellen Pixel mit der Belichtungszeit bei längeren Belichtungszeiten jeweils ein Maß für die Reflektivität der Oberfläche 2 dar, um hochreflektierende und matte Oberflächen zu erkennen und zu unterscheiden. Ein weiteres Maß für die Reflektivität der Oberfläche 2 stellt auch der Quotient aus der Änderung der Anzahl N der hellen Pixel bei kürzeren Belichtungszeiten und der Änderung der Anzahl N der hellen Pixel bei längeren Belichtungszeiten dar. Dies ist insbesondere von Bedeutung, wenn die Menge an im Bild vorhandener Oberfläche variiert. Ist viel Oberfläche im Bild vorhanden, so verschiebt sich die Kurve b in Fign. 2 und 4 tendenziell nach oben, im Falle, dass nur wenig Oberfläche im Bild vorhanden ist, tendenziell nach unten. Durch Bildung des Quotienten erhält man ein vergleichbareres Maß für die Reflektivität der Oberfläche.

Zur Bestimmung der Reflektivität einer Oberfläche 2 werden von der Oberfläche 2 mittels der Kamera 6 Bilder mit jeweils unterschiedlichen Belichtungszeiten t aufgenommen. Anschließend wird mit dem Bildverarbeitungssystem 7 in jedem der aufgenommen Bilder die Anzahl N der derjenigen hellen Pixel bestimmt, welche die vorbestimmte Mindesthelligkeit aufweisen, und aus der Anzahl N dieser hellen Pixel in Abhängigkeit der unterschiedlichen Belichtungszeiten t die Reflektivität der Oberfläche 2, also z.B. die oben genannten Maße für die Reflektivität der Oberfläche 2, bestimmt.

## Patentansprüche

1. Verfahren zum Bestimmen eines Maß für die Reflektivität einer Oberfläche (2), die mit einer Auflichtbeleuchtung (3) beleuchtet wird, wobei von der Oberfläche (2) Bilder mit jeweils unterschiedlichen Belichtungszeiten aufgenommen werden,
wobei in jedem der aufgenommen Bilder derjenige helle Flächenanteil bestimmt wird, in dem eine vorbestimmte Mindesthelligkeit erreicht ist, und aus dem hellen Flächenanteil in Abhängigkeit der unterschiedlichen Belichtungszeiten ein Maß für die Reflektivität der Oberfläche (2) bestimmt wird.

2. Verfahren nach Anspruch 1, **dadurch gekennzeichnet, dass** in jedem der aufgenommen Bilder die Anzahl derjenigen hellen Pixel bestimmt wird, die eine vorbestimmte Mindesthelligkeit aufweisen, und aus der Anzahl dieser hellen Pixel in Abhängigkeit der unterschiedlichen Belichtungszeiten das Maß für die Reflektivität der Oberfläche (2) bestimmt wird.

3. Verfahren nach Anspruch 1 oder 2, **dadurch gekennzeichnet, dass** bei kürzeren Belichtungszeiten die Änderung des hellen Flächenanteils mit der Belichtungszeit als das Maß für die Reflektivität der Oberfläche (2) bestimmt wird.

4. Verfahren nach einem der vorhergehenden Ansprüche, **dadurch gekennzeichnet, dass** bei längeren Belichtungszeiten die Änderung des hellen Flächenanteils mit der Belichtungszeit als das Maß für die Reflektivität der Oberfläche (2) bestimmt wird.

5. Verfahren nach Anspruch 3 und 4, **dadurch gekennzeichnet, dass** der Quotient aus der Änderung des hellen Flächenanteils bei kürzeren Belichtungszeiten und der Änderung des hellen Flächenanteils bei längeren Belichtungszeiten als das Maß für die Reflektivität der Oberfläche (2) bestimmt wird.

6. Vorrichtung (1) zur Bestimmung der Reflektivität einer Oberfläche (2), mit einer Auflichtbeleuchtung (3) zur Beleuchtung der Oberfläche (2), mit einem Sensor (4) zur Aufnahme von Bildern der Oberfläche (2) mit unterschiedlichen Belichtungszeiten und
mit einem Bildverarbeitungssystem (7) zur Verarbeitung der aufgenommenen Bilder,
wobei das Bildverarbeitungssystem (7) ausgebildet ist, in jedem der aufgenommen Bilder denjenigen hellen Flächenanteil zu bestimmen, in dem eine vorbestimmte Mindesthelligkeit erreicht ist, und aus dem hellen Flächenanteil in Abhängigkeit der unterschiedlichen Belichtungszeiten ein Maß für die Reflektivität der Oberfläche (2) zu bestimmen.

## Claims

1. Method for determining a measure of the reflectivity of a surface (2) that is illuminated by reflected light illumination (3), wherein images of the surface (2) are recorded with different exposure times in each case,
wherein in each of the recorded images, that bright surface portion is determined in which a predetermined minimum brightness is obtained and a measure of the reflectivity of the surface (2) is determined from the bright surface portion in dependence on the different exposure times.

2. Method according to claim 1, **characterized in that** in each of the recorded images, the number of those bright pixels that have a predetermined minimum brightness is determined, and the measure of the reflectivity of the surface (2) is determined from the number of those bright pixels in dependence on the different exposure times.

3. Method according to claim 1 or 2, **characterized in that** in case of shorter exposure times, the change of the bright surface portion over the exposure time is determined as the measure of the reflectivity of the surface (2).

4. Method according to any one of the preceding claims, **characterized in that** in case of longer exposure times, the change of the bright surface portion over the exposure time is determined as the measure of the reflectivity of the surface (2).

5. Method according to claims 3 and 4, **characterized in that** the quotient of the change of the bright surface portion in case of shorter exposure times and of the change of the bright surface portion in case of longer exposure times is determined as the measure of the reflectivity of the surface (2).

6. Device (1) for determining the reflectivity of a surface (2), comprising a reflected light illumination (3) for illuminating the surface (2), a sensor (4) for recording images of the surface (2) with different exposure times and an image processing system (7) for processing the recorded images, wherein the image processing system (7) is designed to determine in each of the recorded images that bright surface portion in which a predetermined minimum brightness is obtained, and to determine from the bright surface portion a measure of the reflectivity of the surface (2) in dependence on the different exposure times.

## Revendications

1. Procédé pour déterminer une mesure de la réflectance d'une surface (2) éclairée par un éclairage en lumière incidente (3),
selon lequel on prend des images de la surface (2) avec des temps d'éclairement différents,
dans chacune des images prises, on détermine la fraction de surface claire dans laquelle une luminosité minimale prédéterminée est atteinte et on détermine une mesure de la réflectance de la surface (2) à partir de la fraction de surface claire en fonction des temps d'éclairement différents.

2. Procédé selon la revendication 1, **caractérisé en ce que** dans chacune des images prises, on détermine le nombre des pixels clairs qui présentent une luminosité minimale prédéterminée et on détermine une mesure de la réflectance de la surface (2) à partir du nombre de ces pixels clairs en fonction des temps d'éclairement différents.

3. Procédé selon la revendication 1 ou 2, **caractérisé en ce qu'**on détermine la variation de la fraction de surface claire avec le temps d'éclairement pour des temps d'éclairement plus courts en tant que mesure de la réflectance de la surface (2).

4. Procédé selon l'une des revendications précédentes, **caractérisé en ce qu'**on détermine la variation de la fraction de surface claire avec le temps d'éclairement pour des temps d'éclairement plus longs en tant que mesure de la réflectance de la surface (2).

5. Procédé selon les revendications 3 et 4, **caractérisé en ce qu'**on détermine le quotient de la variation de la fraction de surface claire pour des temps d'éclairement plus courts et de la variation de la fraction de surface claire pour des temps d'éclairement plus longs en tant que mesure de la réflectance de la surface (2).

6. Dispositif (1) de détermination de la réflectance d'une surface (2), avec un éclairage en lumière incidente (3) pour éclairer la surface (2), avec un capteur (4) pour prendre des images de la surface (2) avec des temps d'éclairement différents et
avec un système de traitement d'images (7) pour traiter les images prises,
le système de traitement d'images (7) étant conçu pour déterminer, dans chacune des images prises, la fraction de surface claire dans laquelle une luminosité minimale prédéterminée, est atteinte, et pour déterminer une mesure de la réflectance de la surface (2) à partir de la fraction de surface claire en fonction des temps d'éclairement différents.
